# EUROPEAN PATENT APPLICATION

(11) **EP 4 574 493 A1**
(43) Date of publication of application: **25.06.2025**
(21) Application number: 24219012.2
(22) Date of filing: 11.12.2024
(51) Int. Cl.: B60K 1/04, B60K 1/00

(54) **HYBRID OR ELECTRIC ROAD VEHICLE WITH MODULAR CONTAINERS FOR HIGH-VOLTAGE ELECTRIC/ELECTRONIC COMPONENTS**

(30) Priority: 13.12.2023 IT 202300026571
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

An electric or hybrid road vehicle has a battery pack (8), which is accommodated within a box-shaped containing body (9), and powers at least one electric drive motor (4) through the interposition of an electronic power circuit (16), a cooling unit (27) for cooling the battery pack (8) and the electronic power circuit (16), and at least one container (23, 24) configured to accommodate, on the inside, at least part of the electronic power circuit (16) and fastened on the box-shaped containing body (9) of the battery pack (8).

## Description

### CROSS-REFERENCE TO RELATED APPLICATIONS

This patent application claims priority from Italian patent application no. 102023000026571 filed on December 13, 2023, the entire disclosure of which is incorporated herein by reference.

### TECHNICAL FIELD

The present invention relates to a hybrid or electric road vehicle.

In particular, the present invention relates to a hybrid or electric road vehicle comprising a pair of drive wheels; at least one electric motor to operate the drive wheels; a battery pack to power at least the electric motor; and a box-shaped containing body to accommodate, on the inside, the battery pack itself.

### BACKGROUND

The road vehicle further comprises an electronic power circuit, which is interposed at least between the battery pack and the electric motor, and is configured to selectively control at least the supply of power to the electric motor; and a cooling unit, in particular a hydraulic one, to cool the battery pack and the electronic power circuit.

The electronic power circuit comprises a plurality of electric/electronic components, each housed within a respective metal container configured to provide the electric/electronic component with electromagnetic isolation and protection from external agents that may impair its proper functioning.

The electric/electronic components are distributed within the road vehicle, are connected to each other through the interposition of connectors and electrical wiring extending through the road vehicle, and are cooled by the cooling unit via a plurality of supply ducts extending through the road vehicle itself.

Known electric or hybrid road vehicles of the type described above have some drawbacks mainly stemming from the fact that the presence of separate metal containers for the different electric/electronic components, connectors and electrical wiring, and supply ducts make the road vehicle relatively complex, heavy, bulky, and expensive.

### SUMMARY

The object of the present invention is to provide an electric or hybrid road vehicle which is free of the drawbacks described above and simple and inexpensive to implement.

According to the present invention, an electric or hybrid road vehicle is provided as claimed in the attached claims.

### BRIEF DESCRIPTION OF THE DRAWINGS

This invention will now be described with reference to the attached drawings that illustrate a non-limiting embodiment thereof, in which:
Figure 1 is a schematic perspective view, with parts removed for clarity, of a preferred embodiment of the electric or hybrid road vehicle according to the present invention; and
Figures 2 and 3 are two schematic perspective views, with parts removed for clarity, of a detail of the road vehicle in Figure 1.

### DESCRIPTION OF EMBODIMENTS

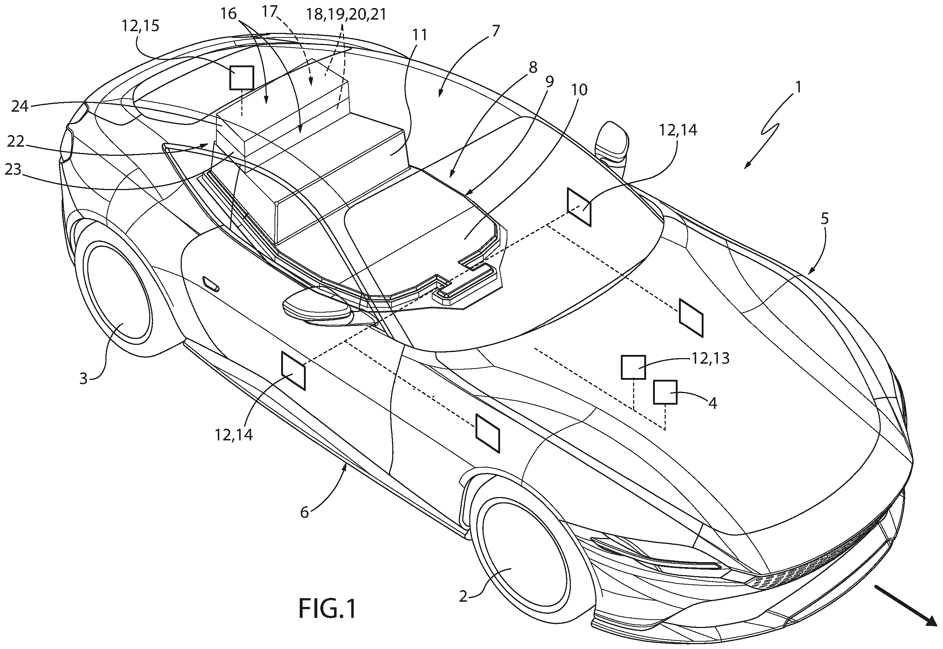

With reference to Figure 1, number 1 indicates, as a whole, a road vehicle equipped with two front wheels 2 and two rear wheels 3 driven by an electric drive system comprising at least one electric motor 4 or, alternatively, by a hybrid drive system comprising an internal combustion engine and at least one electric motor 4.

The road vehicle 1 further comprises a support frame 5 defining at least part of a lower floor 6 of the road vehicle 1, and a passenger compartment 7 mounted on the frame 5 and projecting upwards from the floor 6 itself.

The road vehicle 1 is equipped with a battery pack 8, which is mounted on the frame 5, defining, in this case, part of the floor 6, and is configured to power the motor 4 and at least part of further electrical utilities of the road vehicle 1 itself.

The battery pack 8 is accommodated within a box-shaped containing body 9 comprising a substantially flat lower portion 10 and an upper portion 11 of substantially parallelepiped shape projecting upwards from the portion 10 itself.

The battery pack 8 comprises a plurality of known, non-illustrated cylindrical, packed or planar electrochemical cells electrically connected to each other.

The road vehicle 1 is further provided, in this case, with at least one electric machine 12, which is powered by the battery pack 8, and includes, for example, an air conditioning device 13 inside the passenger compartment 7 and/or at least one additional electric motor 14 for vehicle comfort (e.g., for moving the windows, seats, wipers of the road vehicle 1) and/or at least one electronic safety system 15 (e.g. fans, fuses, assisted braking systems, ABS, autonomous driving systems).

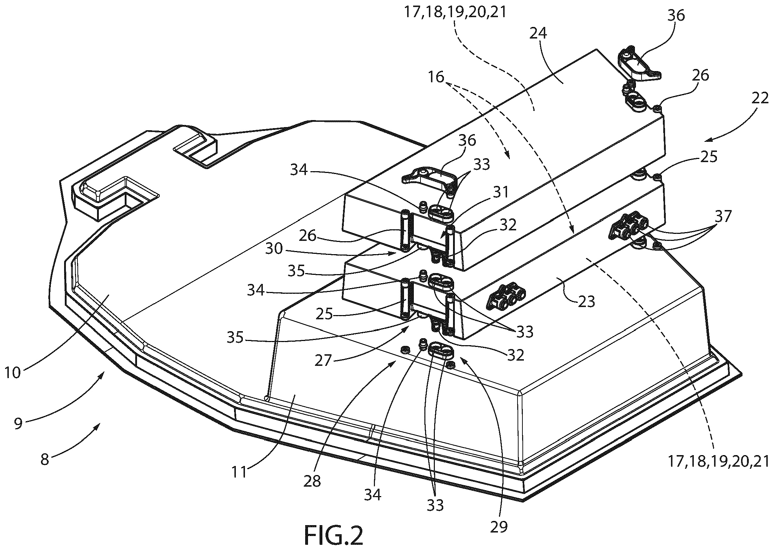

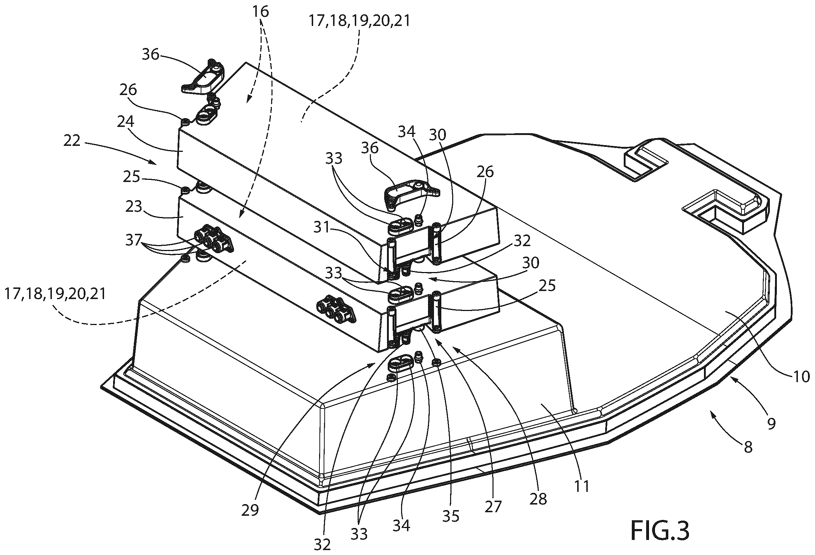

As shown in Figures 1, 2, and 3, the road vehicle 1 also has an electronic power circuit 16, which is electrically interposed between the battery pack 8 and the motor 4 and between the battery pack 8 and the machine 12 and is configured to control the delivery of electrical power to the motor 4 and the machine 12.

The circuit 16 comprises a plurality of electric/electronic components 17, in particular high-voltage electric/electronic components, e.g. at least one electric control 18 for the motor 4 and/or the machine 12 and/or at least one electronic power converter 19 and/or at least one processor 20 and/or at least one computation printed circuit board 21.

The circuit 16 is distributed within a modular containment structure 22 comprising, in this case, two parallelepiped-shaped containers 23, 24, of which the container 23 is locked on the body 9 of the battery pack 8, in particular by means of a plurality of known and non-illustrated fastening screws or bolts engaged through corresponding seats 25 obtained in the container 23, and the container 24 is locked on the container 23, in particular by means of a plurality of known and non-illustrated fastening screws or bolts engaged through corresponding seats 26 obtained in the container 24.

The containers 23, 24 are stacked on the body 9, are made of a metal material and are configured to provide the electric/electronic components 17 with electromagnetic isolation and protection from external agents that may impair their proper functioning.

The road vehicle 1 is further equipped with a cooling unit 27, in this case a hydraulic cooling unit, which extends through the body 9 and the containers 23, 24 to cool the battery pack 8 and the circuit 16.

The road vehicle 1 further comprises a first quick connection device 28 to hydraulically connect the body 9 and the container 23 to one another and to the unit 27, and a second quick connection device 29 to electrically connect the battery pack 8 and the part of the circuit 16 accommodated in the container 23 to one another.

The road vehicle 1 further comprises a third quick connection device 30 to hydraulically connect the containers 23 and 24 to one another and to the unit 27, and a fourth quick connection device 31 to electrically connect the part of the circuit 16 accommodated in the container 23 and the part of the circuit 16 accommodated in the container 24 to one another.

Each quick connection device 29, 31 comprises at least one male connector 32, in this case four male connectors 32, and at least one corresponding female connector 33, in this case four female connectors 33.

Each quick connection device 28, 30 comprises at least one male connector 34, in this case two male connectors 34, and at least one corresponding female connector 35, in this case two female connectors 35.

The sports vehicle 1 further comprises two closing caps 36 to close the upper female connectors 33 and the upper male connectors 34 of the container 24.

In this case, at least the container 23 has additional electrical connectors 37 for connecting the battery pack 8 to a known and non-illustrated charging system for the battery pack 8 itself.

The modular structure 22 is relatively simple and inexpensive, avoids the use of electrical wiring and hydraulic supply ducts distributed throughout the road vehicle 1 and has a relatively high degree of versatility and flexibility capable of guaranteeing a relatively large number of configurations and architectures of the road vehicle 1 itself.

## Claims

1. An electric or hybrid road vehicle comprising a pair of drive wheels (2; 3); at least one electric motor (4) to operate the drive wheels (2; 3); a battery pack (8) to power at least the electric motor (4); a box-shaped containing body (9) to accommodate, on the inside, the battery pack (8); an electronic power circuit (16), which is electrically interposed at least between the battery pack (8) and the electric motor (4) and is configured to selectively control at least the supply of power to the electric motor (4); and a cooling unit (27), in particular a hydraulic one, to cool the battery pack (8) and the electronic power circuit (16); and **characterized in that** it further comprises a first container (23), which is configured to accommodate, on the inside, at least part of the electronic power circuit (16), and first fastening means, in particular fastening screws or bolts, to lock the first container (23) on the box-shaped containing body (9).

2. The road vehicle according to claim 1 and further comprising a first quick connection device (28) to hydraulically connect the box-shaped containing body (9) and the first container (23) to one another and to the cooling unit (27) and a second quick connection device (29) to electrically connect the battery pack (8) and the part of electronic power circuit (16) accommodated in the first container (23) to one another.

3. The road vehicle according to claim 1 or 2 and further comprising a second container (24) to accommodate, on the inside, part of the electronic power circuit (16) and second fastening means, in particular fastening screws or bolts, to lock the second container (24) on the first container (23).

4. The road vehicle according to claim 3 and further comprising a third quick connection device (30) to hydraulically connect said first and second containers (23, 24) to one another and to the cooling unit (27) and a fourth quick connection device (31) to electrically connect the part of electronic power circuit (16) accommodated in the first container (23) and the part of electronic power circuit (16) accommodated in the second container (24) to one another.

5. The road vehicle according to claim 3 or 4, wherein the box-shaped containing body (9), the first container (23) and the second container (24) are stacked on top of one another.

6. The road vehicle according to any one of the claims from 2 to 5, wherein each quick connection device (28, 29, 30, 31) comprises at least one male connector (32, 34) and at least one corresponding female connector (33, 35) .

7. **The** road vehicle according to claim 6 and further comprising at least one closing cap (36) to close the male connectors (32, 34) and/or the female connectors (33, 35) of the quick connection devices (28, 29, 30, 31) of the first container (23) or of the second container (24).

8. The road vehicle according to any one of the preceding claims and further comprising at least one electric machine (12) powered by the battery pack (8) through the interposition of the electronic power circuit (16) .

9. The road vehicle according to claim 8, wherein the electric machine (12) comprises an air conditioning device (13) for the inside of a passenger compartment (7) and/or at least one further electric motor (14) for vehicle comfort and/or at least one electronic safety system (15).

10. The road vehicle according to any one of the preceding claims, wherein the electronic power circuit (16) comprises at least one electric control (18) for the electric motor (4) and/or the electric machine (12) and/or at least one electronic power converter (19) and/or at least one processor (20) and/or at least one computation printed circuit board (21).

11. The road vehicle according to any one of the preceding claims, wherein each one of said first and second containers (23, 24) is made of a metal material.
